# EUROPEAN PATENT SPECIFICATION

(11) **EP 2 053 088 B1**
(45) Date of publication and mention of the grant of the patent: **12.10.2011**
(21) Application number: 07745421.3
(22) Date of filing: 15.06.2007
(51) Int. Cl.: C08L 33/06, C08K 3/04, C08K 5/17, C08K 5/31

(54) **ACRYLIC RUBBER COMPOSITION**
ACRYLKAUTSCHUKZUSAMMENSETZUNG
COMPOSITION DE CAOUTCHOUC ACRYLIQUE

(30) Priority: 16.06.2006 JP 2006167975
(43) Date of publication of application: 29.04.2009
(73) Proprietor: NOK Corporation, Minato-ku Tokyo 105-8585 (JP)
(72) Inventor: MORITANI, Yoichi, Fujisawa-shi, Kanagawa 251-0042 (JP)
(74) Representative: Gulde Hengelhaupt Ziebig & Schneider
(86) International application number: PCT/JP2007/062167
(87) International publication number: WO 2007/145337

(56) References cited:
- JP-A- 8 003 410
- JP-A- 08 003 410
- JP-A- 2003 327 776
- JP-A- 2007 186 631
- US-A- 4 675 362
- US-A1- 2004 162 368
- DATABASE WPI Week 200424 Thomson Scientific, London, GB; AN 2004-250330 XP002575760 -& JP 2003 327776 A (UCHIYAMA KOGYO KK) 19 November 2003 (2003-11-19)

## Description

### Technical Field

The present invention relates to an acrylic rubber composition for use in gaskets for automobiles such as gaskets for engine cam covers, cylinder heads, and the like; and more particularly to an acrylic rubber composition that has an improved compression set, has substantially improved product performance, and can prevent oil leakage in cycle tests.

### Background Art

Acrylic rubber compositions have the highest heat resistance after silicone rubber and fluororubber, and the highest oil resistance after fluororubber, nitrile rubber, and hydrin rubber, and are, in particular, superior to nitrile rubber and hydrin rubber in oil resistance at high temperatures. Since acrylic rubber compositions have excellent heat resistance and oil resistance, and are relatively inexpensive, they are used as automobile components such as oil seals, hoses, and the like.

Patent Document 1 discloses a technique wherein a rubber composition comprising a carboxy-containing acrylic rubber as a base material is applied to heat-resistant hoses. Patent document 1 discloses that, when 50 to 80 parts by weight of a carbon black with a mean particle diameter of 30 to 60 nm and a DBP absorption of 150 cm³/100 g or more are used based on 100 parts by weight of the base material, the original purpose of adding the carbon black can be attained, i.e., good tensile strength and heat resistance, prevention of rubber flattening during extrusion, and the like can be ensured, without greatly affecting the Mooney viscosity of the resulting carboxy-containing acrylic rubber composition.
Patent Document 1: JP 2002-220505 A
Patent Document 2: JP 2003-138085 A (MAF is used as a carbon black.)

### Disclosure of the Invention

### Problems to be Solved by the Invention

In recent years, the range of uses of acrylic rubber compositions have expanded, and the demand for use thereof as gaskets for automobiles (gaskets for engine cam covers and cylinder heads) is expected to grow.

However, it was found that, according to the technique wherein the polymer (the carboxy-containing ACM) used in the acrylic rubber composition described in Patent Document 1 is blended with a carbon black with a mean particle diameter of 30 to 60 nm and a DBP absorption of 150 cm³/100 g or more, the resulting rubber composition causes oil leakage in cycle tests for cam cover gaskets.

The conditions for the cycle tests were as follows. A 150°C atmosphere was maintained for 30 minutes. The temperature was then decreased to -20°C over a period of 15 hours, and the -20°C atmosphere was maintained for 1 hour. Subsequently, the temperature was increased from - 20°C to 150°C over a period of 30 minutes. This procedure was performed as one cycle. It was found that oil leakage typically occurred after 50 to 90 cycles when elevating the temperature.

The present inventor continued extensive research to overcome the problem of oil leakage described above. Consequently, the inventor found that, when a polymer produced from principal monomer components, i.e., an ethyl acrylate or an methoxyethyl acrylate, butyl acrylate (BA), and a crosslinking site monomer with a carboxyl functional group, is blended with a carbon black with a specific range of iodine absorptions and a specific range of DBP absorptions, the resulting rubber composition exhibits an improved compression set not only at room temperature but also at other temperatures, exhibits substantially improved product performance, and can prevent oil leakage in the above-described cycle tests. The present invention was accomplished based on this finding.

Accordingly, an object of the invention is to provide an acrylic rubber composition that has an improved compression set, has substantially improved product performance, and can prevent oil leakage in the above-described cycle tests.

Other objects of the invention will become apparent from the following description.

### Means for Solving the Problems

The above-described object is solved by each of the following inventions.

The invention in defined in claims 1-3.

### Effects of the Invention

The invention provides an acrylic rubber composition that has an improved compression set, has substantially improved product performance, and can prevent oil leakage in cycle tests.

Moreover, the invention provides an acrylic rubber composition that has an improved compression set, has substantially improved product performance, can prevent oil leakage in the above-described cycle tests, and has less curing deterioration of the rubber in the above-described curing deterioration tests.

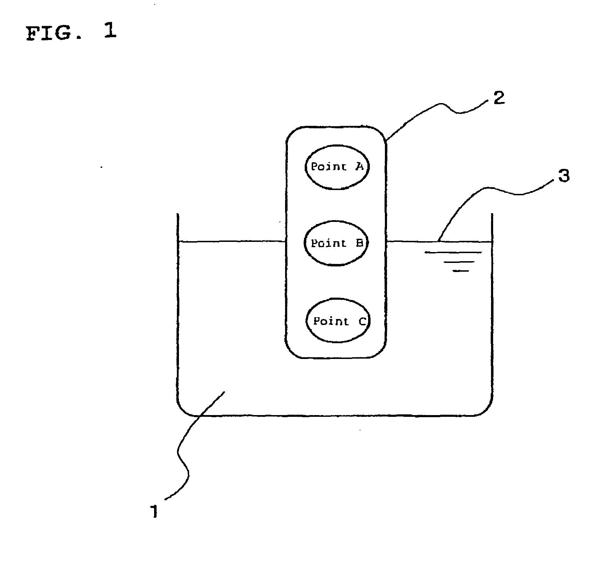

The conditions for the hardness change tests are as follows. A test piece 2 is placed in an engine oil 1 so that it is not fully immersed in the engine oil (see FIG. 1), and the rubber hardness (Hw) at point B (the liquid interface 3 of the engine oil) after 192 hours at 150°C is measured.

### Brief Description of the Drawings

FIG. 1 is a diagram illustrating the hardness change test of the invention.

### Explanation of the Reference Numerals

1: engine oil
2: test piece
3: engine oil liquid interface

### Best Mode for Carrying Out the Invention

Embodiments of the present invention are described below.

The acrylic rubber composition of the invention contains an acrylic rubber polymer, a specific carbon black, and a crosslinking agent.

### <Acrylic rubber polymer>

Principal monomer components used in the acrylic rubber composition of the invention include an ethyl acrylate (EA) or an methoxyethyl acrylate (MEA), butyl acrylate, and a crosslinking site monomer with a carboxyl functional group.

Examples of crosslinking site monomers with a carboxyl group include acrylic acid, methacrylic acid, crotonic acid, 2-pentenoic acid, maleic acid, fumaric acid, itaconic acid, maleic acid monoalkyl ester, fumaric acid monoalkyl ester, itaconic acid monoalkyl ester, and the like.

In the acrylic rubber polymer of the invention, the molar ratio of these crosslinking site monomer units is preferably from 0.5 to 2.

Suitable combinations of principal monomer components for use in the acrylic rubber composition of the invention are methoxyethyl acrylate (MEA)/butyl acrylate (BA)/a carboxy-containing crosslinking site monomer, and ethyl acrylate (EA)/butyl acrylate (BA)/a carboxy-containing crosslinking site monomer. These two combinations can be selectively used in the present invention.

The acrylic rubber polymer of the invention is obtainable by copolymerizing a crosslinking site monomer and other copolymerizable monomer components, according to a known process such as emulsion polymerization, suspension polymerization, solution polymerization, block polymerization, etc.

Examples of other monomer components for use in the acrylic rubber polymer of the invention include carboxy-containing compounds such as acrylic acid, methacrylic acid, crotonic acid, 2-pentenoic acid, maleic acid, fumaric acid, itaconic acid, and the like; fluorine-containing acrylic esters such as 1,1-dihydroperfluoroethyl (meth)acrylate, 1,1-dihydroperfluoropropyl (meth)acrylate, 1,1,5-trihydroperfluorohexyl (meth)acrylate, 1,1,2,2-tetrahydroperfluoropropyl (meth)acrylate, 1,1,7-trihydroperfluoroheptyl (meth)acrylate, 1,1-dihydroperfluorooctyl (meth)acrylate, 1,1-dihydroperfluorodecyl (meth)acrylate, and the like; hydroxy-containing acrylic esters such as 1-hydroxypropyl (meth)acrylate, 2-hydroxypropyl (meth)acrylate, hydroxyethyl (meth)acrylate, and the like; tertiary amino group-containing acrylic esters such as diethylaminoethyl (meth)acrylate, dibutylaminoethyl (meth)acrylate, and the like; methacrylates such as methyl methacrylate, octyl methacrylate, and the like; alkyl vinyl ketones such as methyl vinyl ketone and the like; vinyl and allyl ethers such as vinyl ethyl ether, allyl methyl ether, and the like; vinyl aromatic compounds such as styrene, α-methylstyrene, chlorostyrene, vinyltoluene, and the like; and vinylnitriles such as acrylonitrile, methacrylonitrile, and the like. In addition to these, ethylene, propylene, vinyl chloride, vinylidene chloride, vinyl fluoride, vinylidene fluoride, vinyl acetate, vinyl propionate, alkyl fumarate, and the like can be mentioned.

The acrylic rubber of the invention is commercially available, and examples of such commercial products include "AR14" and "AR12" manufactured by Nippon Zeon Co., Ltd.

### <Carbon black>

In the invention, a carbon black with an iodine adsorption of 20 mg/g and a DBP absorption of 125 cm³/100 g is used.

The iodine adsorption is a value measured based on JIS K6221, and the DBP absorption is a value measured according to the method A (the mechanical method) as defined in JIS K6221.

Examples of carbon blacks that can be used in the invention include "ShoBlack IP200", manufactured by Cabot Japan (iodine adsorption: 20 mg/g, DBP absorption: 125 cm³/100 g).

In the invention, the amount of the carbon black is from 40 to 100 parts by weight, and preferably from 60 to 90 parts by weight, based on 100 parts by weight of the acrylic rubber polymer.

### <Crosslinking agent>

The crosslinking agent used in the invention is a diamine compound capable of forming a crosslinked structure with the carboxyl group of the acrylic rubber polymer relatively easily.

Preferable examples of such diamine compounds include aliphatic multivalent amine crosslinking agents, aromatic multivalent amine crosslinking agents, and the like.

Examples of aliphatic multivalent amine crosslinking agents include hexamethylenediamine, hexamethylenediamine carbamate, tetramethylenepentamine, N,N'-dicinnamylidene-1,6-hexanediamine, and the like.

Examples of aromatic multivalent amine crosslinking agents include 4,4'-methylenedianiline, 4,4'-oxyphenyldiphenylamine, m-phenylenediamine, p-phenylenediamine, 4,4'-methylenebis(o-chloroaniline), 4,4'-diaminodiphenyl ether, 3,4'-diaminodiphenyl ether, 4,4'-(m-phenylenediisopropylidene)dianiline, 4,4'-(p-phenylenediisopropylidene)dianiline, 2,2'-bis[4-(4-aminophenoxy)phenyl]propane, 4,4'-diaminobenzanilide, 4,4'-bis(4-aminophenoxy)biphenyl, m-xylylene diamine, p-xylylene diamine, 1,3,5-benzenetriamine, 1,3,5-benzenetriaminomethyl, hexamethylenediamine-cinnamaldehyde adduct, hexamethylenediamine-dibenzoate salt, and the like.

A crosslinking accelerator is added, in combination with the above-mentioned crosslinking agents, to the acrylic rubber composition of the invention.

Examples of crosslinking accelerators that can be used in combination with the above-mentioned crosslinking agents include guanidine compounds.

Examples of guanidine compounds include 1,3-diphenylguanidine, 1,3-diorthotolylguanidine, tetramethylguanidine, dibutylguanidine, and the like.

In the invention, the crosslinking agent is used in an amount of 0.2 to 2.0 parts by weight based on 100 parts by weight of the acrylic rubber polymer.

In the invention, a diamine compound is used as a crosslinking agent, and a guanidine compound is used as a crosslinking accelerator. In this case, the diamine compound is used in an amount of 0.2 to 2.0 parts by weight, and the guanidine compound is used in an amount of 0.5 to 4.0 parts by weight, based on 100 parts by weight of the acrylic rubber polymer.

### <Plasticizer>

The rubber composition of the invention may contain a plasticizer. Such a plasticizer is commercially available, and examples of commercially available products include "Adeka Cizer RS700", manufactured by Adeka Corporation.

When an alkoxyalkyl acrylate is used as a principal monomer component of the acrylic rubber polymer, the amount of the plasticizer is preferably 10 parts by weight or less, and more preferably 2 to 5 parts by weight, based on 100 parts by weight of the acrylic rubber polymer.

### <Processing aid>

The rubber composition of the invention may contain a processing aid. Such a processing aid is commercially available, and examples of commercially available products include "Phosphanol RL210", manufactured by Toho Chemical Industry Co., Ltd.

### <Other blending components>

The rubber composition of the invention may contain, as needed, additives such as reinforcing materials, fillers, antioxidants, light stabilizers, lubricants, tackifiers, flame retardants, antifungal agents, antistatic agents, coloring agents, and the like.

The rubber composition of the invention may further contain, as needed, rubbers other than acrylic rubber, elastomers, resins, and the like. Examples of such usable components include rubbers such as natural rubber, polybutadiene rubber, polyisoprene rubber, styrene-butadiene rubber, and acrylonitrile-butadiene rubber; elastomers such as olefin elastomers, styrene elastomers, vinyl chloride elastomers, polyester elastomers, polyamide elastomers, polyurethane elastomers, and polysiloxane elastomers; resins such as polyolefin resins, polystyrene resins, polyacrylic resins, polyphenylene ether resins, polyester resins, and polycarbonate resins; and the like.

### <Preparation, crosslinking, and molding of the rubber composition>

When preparing the rubber composition of the invention, a suitable mixing method can be employed, such as roll mixing, Banbury mixing, screw mixing, solution mixing, or the like.

The acrylic rubber composition of the invention is heated during crosslinking. The heating temperature is preferably from 130 to 220°C, and more preferably from 140 to 200°C, and the crosslinking time is preferably from 30 seconds to 5 hours.

The heating method may be suitably selected from the methods used to crosslink rubbers, such as press heating, steam heating, oven heating, hot-air heating, and the like.

After the primary crosslinking, secondary crosslinking may be performed to ensure that the inside of the crosslinked product is crosslinked. The time of secondary crosslinking depends on the heating method, crosslinking temperature, shape, and the like, but is preferably from 1 to 48 hours. The heating method and the heating temperature may be suitably selected.

The method for molding the rubber composition of the invention is not particularly limited. Any method capable of molding gaskets for automobiles (gaskets for engine cam covers or cylinder heads) can be used, such as compression molding, injection molding, transfer molding, or extrusion molding.

Molding and crosslinking may be performed simultaneously, or crosslinking may be performed after molding.

### Examples

The effects of the present invention will be demonstrated by way of the following Examples.

### Example 1

| | |
|---|---|
| Acrylic rubber polymer: "AR 14", manufactured by Nippon Zeon Co., Ltd. | 100 parts by weight |
| Carbon black: ("ShoBlack IP200", manufactured by Cabot Japan) (iodine adsorption: 20 mg/g, DBP absorption: 125 cm³/100 g) | 61 parts by weight |
| Stearic acid | 1 part by weight |
| Plasticizer: ("Adeka Cizer RS700", manufactured by Adeka Corporation) | 15 parts by weight |
| Antioxidants: | |
| Mercaptomethylimidazole ("Nocrac MMB", manufactured by Ouchi Shinko Chemical industrial, Co., Ltd.) | 1 part by weight |
| 4,4'-Bis(dimethylbenzyl)diphenylamine (CD) ("Nocrac CD", manufactured by Ouchi Shinko Chemical industrial, Co., Ltd.) | 2 parts by weight |
| Crosslinking agent: (hexamethylenediamine carbamate) ("AC6-66", manufactured by Unimatec, Co., Ltd.) | 0.5 parts by weight |
| Crosslinking accelerator: (guanidine compound: "Nocceler DT", manufactured by Ouchi Shinko Chemical industrial, Co., Ltd.) | 2 parts by weight |

### <Evaluation method>

### (Normal physical properties)

The above composition (except for the crosslinking components) was used to prepare uncrosslinked rubber sheets with a thickness of 2 mm, using a 6-inch mixing roll. The uncrosslinked rubber sheets were press-cured for 60 minutes at 160°C, and subsequently oven-cured for 8 hours at 150°C, thereby producing sheet-like rubber test pieces for evaluation of normal physical properties.

These rubber test pieces were evaluated for their rubber hardness, tensile strength (MPa), and ultimate elongation (%) according to the following methods. Table 2 shows the evaluation results.

1. Rubber hardness Hs was measured according to JIS K6253, using a Type A durometer.
2. Tensile strength Tb (MPa) was measured according to JIS K6251.
3. Ultimate elongation Eb (%) was measured according to JIS K6251 (measured at 23±3°C).

### (Compression set CS)

Using the above-mentioned uncrosslinked acrylic rubber composition, large test pieces in accordance with JIS K6262 were prepared by press-curing for 60 hours at 160°C and oven-curing for 8 hours at 150°C. These test pieces were evaluated for their compression set (%) after ageing and heat resistance tests for 70 hours at 150°C according to JIS K6262. Table 2 shows the evaluation results.

### (Ageing and heat resistance)

As with the evaluation of compression set, the changes (rates) in normal physical properties after ageing and heat resistance tests for 70 hours at 150°C were evaluated. More specifically, the rubber hardness Hs was determined by measuring the change value AH (point) relative to the normal physical property. Table 2 shows the results. The tensile strength Tb and the ultimate elongation Eb were determined by measuring the change rates AC (%) relative to the normal physical properties. Table 2 shows the results.

### (Product cycle tests)

### Test I

The uncrosslinked acrylic rubber composition was press-cured for 60 minutes at 160°C and oven-cured for 8 hours at 150°C to prepare crosslinked products, and then the crosslinked products were subjected to cycle tests for cam cover gaskets.

The conditions for the cycle tests were as follows. A 150°C atmosphere was maintained for 30 minutes. The temperature was then decreased to -40°C over a period of 15 hours, and the -40°C atmosphere was maintained for 1 hour. Subsequently, the temperature was increased from - 40°C to 150°C over a period of 30 minutes. This procedure was performed as one cycle. Whether or not oil leakage typically occurred after 50 to 90 cycles was examined. The evaluation was made according to the following criteria.

A: There was no oil leakage after 90 or more cycles.
B: There was oil leakage from after 50 or more cycles to less than 90 cycles.
C: There was oil leakage from after 20 or more cycles to less than 50 cycles.

Table 2 shows the results.

### Example 2

Evaluations were made in the same manner as Example 1, except that the amount of the carbon black was changed as shown in Table 2. Table 2 shows the results.

### Comparative Examples 1 to 6

Evaluations were made in the same manner as Example 1, except that the carbon blacks were changed as shown in Table 2. Table 2 shows the results.

The physical properties and the like of the carbon blacks are given in Table 1.

[Table 1]

| | ASTM Code/ Old Classification | Manufacturer | Tradename | Iodine Absorption (mg/g) | DBP Absorption (cm³/100 g) |
|---|---|---|---|---|---|
| Comp. Ex. 1 | N550/FEF | Tokai Carbon Co., Ltd. | Seast S0 | 44 | 115 |
| Comp. Ex. 2 | N330/HAF | Tokai Carbon Co., Ltd. | Seast3 | 80 | 101 |
| Comp. Ex. 3 | FEF-HS | Tokai Carbon Co., Ltd. | Seast FM | 35 | 160 |
| Comp. Ex 4 | SRF | Tokai Carbon Co., Ltd. | Seast S | 26 | 68 |
| Comp. Ex. 5 | SAF-HS | Tokai Carbon Co., Ltd. | Seast 9H | 139 | 130 |
| Comp. Ex. 6 | N990/FEF | Huber | Huber N-990 | 15 | 43 |

**[Table 2]**

| | | | | Ex. 1 | Ex. 2 | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|
| Polymer: | | | | (Parts by Weight) | | | | | | | |
| | AR14 | | | 100 | 100 | 100 | 100 | 100 | 100 | 100 | 100 |
| | Carboxy-Containing ACM | | | | | | | | | | |

| Carbon Black: | | | | (Parts by Weight) | | | | | | | |
|---|---|---|---|---|---|---|---|---|---|---|---|
| | IP200 | | | 61 | 70 | | | | | | |
| | FEF | | | | | 58 | | | | | |
| | HAF | | | | | | 62 | | | | |
| | FEF-HS | | | | | | | 64 | | | |
| | SRF | | | | | | | | 80 | | |
| | SAF-HS | | | | | | | | | 52 | |
| | MT | | | | | | | | | | 100 |
| Plasticizer: Adeka Cizer RS700 | | | | 15 | 15 | 15 | 15 | 15 | 15 | 15 | 15 |
| Crosslinking Agent: Hexamethylenediamine Carbamate (AC6-66) | | | | 0.5 | 0.5 | 0.5 | 0.5 | 0.5 | 0.5 | 0.5 | 0.5 |
| | | | Diaminodiphenyl Ether (CLP 5050) | | | | | | | | |
| Crosslinking Accelerator: Acc. DT | | | | 2 | 2 | 2 | 2 | 2 | 2 | 2 | 2 |
| | | | | | | | | | | | |

| Normal Physical Properties | | | | | | | | | | | |
|---|---|---|---|---|---|---|---|---|---|---|---|
| | | Rubber Hardness Hs (JIS-A) | | 55 | 60 | 58 | 62 | 64 | 58 | 62 | 60 |
| | | Tensile Strength Tb (MPa) | | 8.7 | 9.1 | 9.3 | 10.1 | 8.3 | 8.4 | 9.8 | 6.5 |
| | | Ultimate Elongation Eb (%) | | 280 | 230 | 180 | 360 | 240 | 300 | 410 | 200 |
| Compression Set CS (%) 150°C, 70 Hr | | | | 9 | 9 | 12 | 12 | 12 | 14 | 11 | 11 |

| Ageing and Heat Resistance (150°C, 70 Hr) | | | | | | | | | | | |
|---|---|---|---|---|---|---|---|---|---|---|---|
| | | Rubber Hardness Change AH (Hs) (Point) | | -1 | 1 | 1 | ±0 | -1 | -1 | -1 | -1 |
| | | Tensile Strength Change Rate AC (Tb) (%) | | -3 | -3 | 0 | -4 | -1 | -5 | -1 | 0 |
| | | Ultimate Elongation Change Rate AC (Eb)(%) | | 0 | 0 | 1 | -3 | 11 | 7 | 8 | -4 |
| Product Cycle Test Evaluation (-40°C) | | | | A | A | B | B | B | B | B | B |

Table 2 reveals that the rubber compositions of the present invention exhibited excellent normal physical properties, a good compression set (CS), substantially improved product performance, and excellent heat resistance, and were also capable of preventing oil leakage in the product cycle tests I (Examples 1 and 2).

In Comparative Example 1, because FEF was used as a carbon black, the rubber composition was inferior in heat resistance, ultimate elongation, CS, and conformability at low temperatures during heat cycling.

In Comparative Example 2, because HAF with a high iodine adsorption was used as a carbon black, the rubber composition exhibited good rubber reinforcing properties (tensile strength, ultimate elongation, and heat resistance), but had high hardness and thus relatively poor workability, had poor CS, and had poor conformability at low temperatures during heat cycling. The rubber composition was thus susceptible to oil leakage during the cycle tests I.

In Comparative Example 3, because FEF-HS with a high DBP absorption, i.e., a high structure carbon black, was used, the rubber composition had poor workability, high hardness, poor CS, and poor conformability during the cycle tests I.

In Comparative Example 4, SRF was used as a carbon black. SRF was about equal in particle diameter to the carbon black of the invention, but had a low structure; thus, the rubber composition was inferior in reinforcing properties and CS, and did not have sufficient properties as gaskets.

In Comparative Example 5, because SAF-HS with a high iodine adsorption and a high DBP absorption was used as a carbon black, the rubber composition had high hardness and thus poor workability, poor CS, and poor conformability during the cycle tests I.

In Comparative Example 6, because MT with a considerably low DBP absorption was used as a carbon black, the rubber composition had insufficient reinforcing properties and CS, had poor conformability at low temperatures during the cycle tests I, and was susceptible to seal leakage.

### Example 3

| | |
|---|---|
| Acrylic rubber polymer: "AR 12", manufactured by Nippon Zeon Co., Ltd. | 100 parts by weight |
| Carbon black: ("ShoBlack IP200", manufactured by Cabot Japan) (iodine adsorption: 20 mg/g, DBP absorption: 125 cm³/100 g) | 57 parts by weight |
| Stearic acid | 1 part by weight |
| Plasticizer: ("Adeka Cizer RS700", manufactured by Adeka Corporation) | 10 parts by weight |
| Antioxidants: | |
| Mercaptomethylimidazole ("Nocrac MMB", manufactured by Ouchi Shinko Chemical industrial, Co., Ltd..) | 1 part by weight |
| 4,4'-Bis(dimethylbenzyl)diphenylamine (CD) ("Nocrac CD", manufactured by Ouchi Shinko Chemical industrial, Co., Ltd.) | 2 parts by weight |
| Crosslinking agent: (hexamethylenediamine carbamate) ("AC6-66", manufactured by Unimatec, Co., Ltd.) | 0.5 parts by weight |
| Crosslinking accelerator: (guanidine compound: "Nocceler DT", manufactured by Ouchi Shinko Chemical industrial, Co., Ltd.) | 2 parts by weight |
| Processing aid ("Phosphanol RL210", manufactured by Toho Chemical Industry Co., Ltd.) | 2 parts by weight |

### <Evaluation method>

### (Normal physical properties)

The above composition (except for the crosslinking components) was used to prepare uncrosslinked rubber sheets with a thickness of 2 mm, using a 6-inch mixing roll. The uncrosslinked rubber sheets were press-cured for 60 minutes at 160°C, and subsequently oven-cured for 8 hours at 150°C, thereby producing sheet-like rubber normal physical properties.

These rubber test pieces were evaluated for their rubber hardness, tensile strength (MPa), and ultimate elongation (%) according to the following methods. Table 3 shows the evaluation results.

1. Rubber hardness Hs was measured according to JIS K6253, using a Type A durometer.
2. Tensile strength Tb (MPa) was measured according to JIS K6251.
3. Ultimate elongation Eb (%) was measured according to JIS K6251 (measured at 23±3°C).

### (Compression set CS)

Using the above-mentioned uncrosslinked acrylic rubber composition, large test pieces in accordance with JIS K6262 were prepared by press-curing for 60 minutes at 160°C and oven-curing for 8 hours at 150°C. These test pieces were evaluated for their compression set (%) after ageing and heat resistance tests for 70 hours at 150°C according to JIS K6262. Table 3 shows the evaluation results.

### (Ageing and heat resistance)

As with the evaluation of compression set, the changes (rates) in normal physical properties after ageing and heat resistance tests for 70 hours at 150°C were evaluated. More specifically, the rubber hardness Hs was determined by measuring the change value AH (point) relative to the normal physical property. Table 2 shows the results. The tensile strength Tb and the ultimate elongation Eb were determined by measuring the change rates AC (%) relative to the normal physical properties. Table 3 shows the results.

### (Low-temperature property tests)

The TR10 value (°C) was determined according to JIS K6261. Table 3 shows the result.

### (Product cycle tests)

### Test II

The uncrosslinked acrylic rubber composition was press-cured for 60 minutes at 160°C and oven-cured for 8 hours at 150°C to prepare crosslinked products, and then the crosslinked products were subjected to cycle tests for cam cover gaskets.

The conditions for the cycle tests were as follows. A 150°C atmosphere was maintained for 30 minutes. The temperature was then decreased to -20°C over a period of 15 hours, and the -20°C atmosphere was maintained for 1 hour. Subsequently, the temperature was increased from -20°C to 150°C over a period of 30 minutes. This procedure was performed as one cycle. Whether or not oil leakage typically occurred after 50 to 90 cycles was examined. The evaluation was made according to the following criteria.

A: There was no oil leakage after 90 or more cycles.
B: There was oil leakage from after 50 or more cycles to less than 90 cycles.
C: There was oil leakage from after 20 or more cycles to less than 50 cycles.

Table 3 shows the results.

### (Interface hardness change tests)

As shown in FIG. 1, the test piece was placed in the engine oil (a pure oil "SH OW-20, manufactured by Mitsubishi Motors Corporation) so that it was not fully immersed in the engine oil, and the rubber hardness at point B (the liquid interface of the engine oil) after 192 hours at 150°C was measured to determine the change value AH (point) relative to the normal physical property. A value of +15 or less indicates that deterioration of the hardness was suppressed.

Table 3 shows the result.

### Example 4

Evaluations were made in the same manner as Example 3, except that the amount of the carbon black and the amount of the plasticizer were changed as shown in Table 3. Table 3 shows the results.

### Example 5

Evaluations were made in the same manner as Example 3, except that the crosslinking agent and the crosslinking accelerator were changed as shown in Table 3. Table 3 shows the results.

### Example 6

Evaluations were made in the same manner as Example 3, except that the amount of the carbon black, the amount of the plasticizer, and the crosslinking agent and the crosslinking accelerator were changed as shown in Table 3. Table 3 shows the results.

### Examples 7 and 8

Evaluations were made in the same manner as Example 3, except that 100 parts by weight of "AR 14", manufactured by Nippon Zeon Co., Ltd., were used as the acrylic rubber polymer, and the amounts of carbon black and plasticizer were changed as shown in Table 3. Table 3 shows the results.

**[Table 3]**

| | | | | | | Ex. 3 | Ex. 4 | Ex. 5 | Ex. 6 | Ex. 7 | Ex. 8 |
|---|---|---|---|---|---|---|---|---|---|---|---|
| Polymer: AR12 | | | | | | 100 | 100 | 100 | 100 | | |
| | AR14 | | | | | | | | | 100 | 100 |
| Carbon Used: IP200 | | | | | | 57 | 64 | 57 | 64 | 64 | 65 |
| | | FEF | | | | | | | | | |
| | | SRF | | | | | | | | | |
| | | MT Carbon | | | | | | | | | |
| Plasticizer: Adeka Cizer RS700 | | | | | | 10 | 15 | 10 | 15 | 2 | 10 |
| Crosslinking Agent: Hexamethylenediamine Carbamate (AC6-66) | | | | | | 0.5 | 0.5 | | | 0.5 | 0.5 |
| | | | Diaminodiphenyl Ether (CLP 5050) | | | | | 2 | 2 | | |
| Crosslinking Accelerator: Acc. DT | | | | | | 2 | 2 | 0.7 | 0.7 | 2 | 2 |
| | | | | | | | | | | | |
| Normal Physical Values: Rubber Hardness Hs (JIS-A) | | | | | | 56 | 56 | 56 | 56 | 63 | 57 |
| | | | | Tensile Strength Tb (MPa) | | 9.2 | 8.5 | 9.1 | 8.5 | 9.82 | 9.15 |
| | | | | Ultimate Elongation Eb (%) | | 290 | 300 | 290 | 300 | 270 | 290 |
| Compression Set CS (%) 150°C, 70 Hr | | | | | | 6 | 7 | 11 | 13 | 8 | 9 |

| Ageing and Heat Resistance (150°C, 70 Hr) | | | | | | | | | | | |
|---|---|---|---|---|---|---|---|---|---|---|---|
| | | Rubber Hardness Change AH (Hs) (Point) | | | | ±0 | ±0 | ±0 | ±0 | -2 | -2 |
| | | Tensile Strength Change Rate AC (Tb)(%) | | | | -4 | -4 | ±0 | +1 | -5 | -2 |
| | | Ultimate Elongation Change Rate AC (Eb) (%) | | | | +8 | +13 | +9 | +12 | -2 | -5 |
| Low-Temperature Property | | | | | TR 10 (°C) | -33 | -36 | -33 | -37 | -34 | -38 |

| Product Evaluation Results | | | | | | | | | | | |
|---|---|---|---|---|---|---|---|---|---|---|---|
| | | Product Cycle Test Evaluation (-20°C) | | | | A | A | A | A | A | A |

| Rubber Curing Caused by Engine Oil | | | | | | | | | | | |
|---|---|---|---|---|---|---|---|---|---|---|---|
| | | Interface Hardness Change AH (Hw) (Point) | | | | +7 | +9 | +9 | +10 | +8 | +15 |

Table 3 reveals that the rubber compositions of the present invention exhibited excellent normal physical properties, good compression sets (CS), substantially improved product performance, and excellent heat resistance, were capable of preventing oil leakage in the product cycle tests II, and had less hardness deterioration (Examples 3 to 8).

## Claims

1. Use of an acrylic rubber composition comprising:
(A) 100 parts by weight of an acrylic rubber polymer produced by polymerizing principal monomer components comprising ethyl acrylate (EA) or methoxyethyl acrylate (MEA), and butyl acrylate, and a crosslinking site monomer with a functional group, wherein the functional group of the crosslinking site monomer is a carboxyl group, with:
(B) 40 to 100 parts by weight of a carbon black with an iodine adsorption of 20 mg/g and a DBP absorption of 125 cm³/100 g; and
(C) 0.2 to 2.0 parts by weight of a crosslinking agent comprising a diamine compound; and 0.5 to 4.0 parts by weight of a crosslinking accelerator comprising a guanidine compound, based on 100 parts by weight of the acrylic rubber polymer; **characterized in that** the acrylic rubber composition is used as gasket for engine cam covers or cylinder heads.

2. The use of claim 1, wherein the acrylic rubber composition comprises:
(A) 100 parts by weight of an acrylic rubber polymer produced by polymerizing principal monomer components comprising ethyl acrylate (EA), butyl acrylate, and a crosslinking site monomer with a functional group, wherein the functional group of the crosslinking site monomer is carboxy group, with:
(B) 40 to 100 parts by weight of a carbon black with an iodine adsorption of 20 mg/g and a DBP absorption of 125 cm³/100 g; and
(C) 0.2 to 2.0 parts by weight of a crosslinking agent comprising a diamine compound; and 0.5 to 4.0 parts by weight of a crosslinking accelerator comprising a guanidine compound, based on 100 parts by weight of the acrylic rubber polymer.

3. The use of claim 1, wherein the acrylic rubber composition comprises:
(A) 100 parts by weight of an acrylic rubber polymer produced by polymerizing principal monomer components comprising methoxyethyl acrylate (MEA), butyl acrylate, and a crosslinking site monomer with a functional group, wherein the functional group of the crosslinking site monomer is a carboxyl group, with:
(B) 40 to 100 parts by weight of a carbon black with an iodine adsorption of 20 mg/g and a DBP absorption of 125 cm³/100 g; and
(C) 0.2 to 2.0 parts by weight of a crosslinking agent comprising a diamine compound; and 0.5 to 4.0 parts by weight of a crosslinking accelerator comprising a guanidine compound, based on 100 parts by weight of the acrylic rubber polymer.

## Patentansprüche

1. Verwendung einer Acrylkautschuk-Zusammensetzung, umfassend:
(A) 100 Gewichtsteile eines Acrylkautschukpolymers, hergestellt durch Polymerisation der Hauptmonomerkomponenten, umfassend Ethylacrylat (EA) oder Methoxyethylacrylat (MEA) und Butylacrylat und ein Monomer mit Vernetzungsstelle mit einer funktionellen Gruppe, wobei die funktionelle Gruppe des Monomers mit Vernetzungsstelle eine Carboxylgruppe ist, mit:
(B) 40 bis 100 Gewichtsteilen eines Rußes mit einer lodadsorption von 20 mg/g und einer DBP-Absorption von 125 cm³/100 g; und
(C) 0,2 bis 2,0 Gewichtsteilen eines Vernetzers, umfassend eine Diaminverbindung, und 0,5 bis 4,0 Gewichtsteilen eines Vernetzungsbeschleunigers, umfassend eine Guanictinverbindung, bezogen auf 100 Gewichtsteile des Acrylkautschukpolymers;
**dadurch gekennzeichnet, dass** die Acrylkautschuk-Zusammensetzung als Dichtung für Motorenventildeckel oder Zylinderköpfe verwendet wird.

2. Verwendung von Anspruch 1, wobei die Acrylkautschuk-Zusammensetzu ng
(A) 100 Gewichtsteile eines Acrylkautschukpolymers, hergestellt durch Polymerisation der Hauptmonomerkomponenten, umfassend Ethylacrylat (EA), Butylacrylat und ein Monomer mit Vernetzungsstelle mit einer funktionellen Gruppe, wobei die funktionelle Gruppe des Monomers mit Vernetzungsstelle eine Carboxylgruppe ist, mit:
(B) 40 bis 100 Gewichtsteilen eines Rußes mit einer lodadsorption von 20 mg/g und einer DBP-Absorption von 125 cm³/100 g; und
(C) 0,2 bis 2,0 Gewichtsteilen eines Vernetzers, umfassend eine Diaminverbindung, und 0,5 bis 4,0 Gewichtsteilen eines Vernetzungsbeschleunigers, umfassend eine Guanidinverbindung, bezogen auf 100 Gewichtsteile des Acrylkautschukpolymers,
umfasst.

3. Verwendung nach Anspruch 1, wobei die Acrylkautschuk-Zusammensetzung
(A) 100 Gewichtsteile eines Acrylkautschukpolymers, hergestellt durch Polymerisation der Hauptmonomerkomponenten, umfassend Methoxyethylacrylat (MEA), Butylacrylat und ein Monomer mit Vernetzungsstelle und einer funktionellen Gruppe, wobei die funktionelle Gruppe des Monomers mit Vernetzungsstelle eine Carboxylgruppe ist, mit:
(B) 40 bis 100 Gewichtsteilen eines Rußes mit einer lodadsorption von 20 mg/g und einer DBP-Absorption von 125 cm³/100 g; und
(C) 0,2 bis 2,0 Gewichtsteilen eines Vernetzers, umfassend eine Diaminverbindung, und 0,5 bis 4,0 Gewichtsteilen eines Vernetzungsbeschleunigers, umfassend eine Guanidinverbindung, bezogen auf 100 Gewichtsteile des Acrylkautschukpolymers,
umfasst.

## Revendications

1. Utilisation d'une composition de caoutchouc acrylique comprenant:
(A) 100 parties en poids d'un polymère de caoutchouc acrylique produit en polymérisant des composants monomères principaux comprenant de l'éthylacrylate (EA) ou du méthoxyéthyl acrylate (MEA) et du butyl acrylate, et un monomère comportant un site de réticulation et comprenant un groupe fonctionnel, moyennant quoi le groupe fonctionnel du monomère comportant un site de réticulation est un groupe carboxyl, et
(B) 40 à 100 parties en poids d'un noir de carbone ayant une adsorption de l'iode de 20 mg/g et une adsorption de l'huile DBP de 125 cm³/ 100 g, et
(C) 0,2 à 2,0 parties en poids d'un agent réticulant comprenant un composé diamine, et 0,5 à 4,0 parties en poids d'un accélérateur de réticulation comprenant un composé guanidine, les quantités étant basées sur 100 parties en poids du polymère de caoutchouc acrylique,
**caractérisée en ce que** la composition de caoutchouc acrylique est utilisée pour fabriquer des joints de cache culbuteur de moteur ou de culasses.

2. Utilisation selon la revendication 1, dans laquelle la composition de caoutchouc acrylique comprend:
(A) 100 parties en poids d'un polymère de caoutchouc acrylique produit en polymérisant des composants monomères principaux comprenant de l'éthylacrylate (EA), du butyl acrylate et un monomère comportant un site de réticulation et comprenant un groupe fonctionnel, moyennant quoi le groupe fonctionnel du monomère comportant un site de réticulation est un groupe carboxyl, et
(B) 40 à 100 parties en poids d'un noir de carbone ayant une adsorption de l'iode de 20 mg/g et une adsorption de l'huile DBP de 125 cm³/100 g, et
(C) 0,2 à 2,0 parties en poids d'un agent réticulant comprenant un composé diamine, et 0,5 à 4,0 parties en poids d'un accélérateur de réticulation comprenant un composé guanidine, les quantités étant basées sur 100 parties en poids du polymère de caoutchouc acrylique.

3. Utilisation selon la revendication 1, dans laquelle la composition de caoutchouc acrylique comprend :
(A) 100 parties en poids d'un polymère de caoutchouc acrylique produit en polymérisant des composants monomères principaux comprenant du méthoxyéthyl acrylate (MEA), du butyl acrylate et un monomère comportant un site de réticulation et comprenant un groupe fonctionnel, moyennant quoi le groupe fonctionnel du monomère comportant un site de réticulation est un groupe carboxyl, et
(B) 40 à 100 parties en poids d'un noir de carbone ayant une adsorption de l'iode de 20 mg/g et une adsorption de l'huile de DBP de 125 cm³/100 g, et
(C) 0,2 à 2,0 parties en poids d'un agent réticulant comprenant un composé diamine, et 0,5 à 4,0 parties en poids d'un accélérateur de réticulation comprenant un composé guanidine, les quantités étant basées sur 100 parties en poids du polymère de caoutchouc acrylique,
